# FASCICULE DE BREVET EUROPEEN

(11) **EP 0 408 428 B1**
(45) Date de publication et mention de la délivrance du brevet: **29.09.1993**
(21) Numéro de dépôt: 90401943.7
(22) Date de dépôt: 05.07.1990
(51) Int. Cl.: E04B 1/76

(54) **Produit isolant thermique et phonique, son procédé de fabrication et son utilisation**
Schall- und wärmeisolierendes Produkt, Verfahren zur Herstellung und Verwendung
Product for thermal and acoustical isolation, fabrication procedure and utilisation

(30) Priorité: 14.07.1989 CH 2658/89
(43) Date de publication de la demande: 16.01.1991
(73) Titulaire: ISOVER SAINT-GOBAIN, F-92400 Courbevoie (FR)
(72) Inventeur: Baracchini, Paolo, CH-1009 Pully (CH); Vullième, Jean-Pierre, CH-1522 Lucens (CH)
(74) Mandataire: Menes, Catherine

(56) Documents cités:
- EP-A- 0 086 681
- WO-A-82/01024
- US-A- 3 590 540
- US-A- 3 899 855

## Description

L'invention a pour objet un feutre à base de laine minérale, notamment de laine de verre, destiné à l'isolation thermique et acoustique des murs, par l'extérieur, derrière des bardages rapportés.

L'isolation extérieure des murs est couramment obtenue au moyen de panneaux ou rouleaux que l'on vient coller ou fixer mécaniquement sur le mur maçonné ou en béton ou encore ligaturer ou embrocher sur l'ossature d'un bardage, les panneaux ou rouleaux étant ensuite masqués par un bardage rapporté, placé de préférence à une certaine distance de l'isolant de façon à assurer une bonne ventilation qui évite les risques de condensation de la vapeur d'eau et les dommages que cette condensation pourraient entraîner.

Ce procédé est très avantageux notamment en raison de la variété des types de bardage possibles (plaques en fibres-ciment, ardoises, tuiles, briques de parement, bardeaux de bois, clins métalliques ou PVC, etc...) et de la possibilité d'opérer sur des bâtiments neufs ou anciens.

Pour cette utilisation, les produits isolants à base de laine minérale sont tout particulièrement avantageux en raison de leur légèreté, de leur bonne résistance mécanique et surtout de la qualité de l'isolation thermique et acoustique due notamment à leur élasticité et à leur porosité. Ces produits sont typiquement faits de fibres minérales maintenues en cohésion par un liant organique (résine phénol-formaldéhyde du type résol modifiée ou non à l'urée par exemple). Le liant est pulvérisé sous forme d'un encollage aqueux lors de la réception des fibres et le tapis de fibres encollées est ensuite conduit dans une étuve où se produit la polymérisation du liant, le feutre ainsi réalisé présentant pour cette gamme d'application une densité comprise par exemple entre 10 et 40 kg/m³ et étant conditionné sous forme de panneaux ou de rouleaux.

L'isolation extérieure est bien sûr confrontée au problème des intempéries lors de la pose sur chantiers, le bardage final assurant la protection externe n'étant généralement monté qu'une fois l'isolation entièrement terminée. Pour obvier ce problème, il est connu de revêtir le feutre d'un voile de verre qui améliore la résistance mécanique et protège l'isolant en cas d'intempéries. Toutefois cette protection n'est que momentanée (au plus quelques semaines) et n'est donc satisfaisante que si les travaux sur le chantier s'effectuent à un rythme normal.

Mais en pratique, de nombreux chantiers sont laissés en l'état pendant des périodes fort longues, fréquemment de 3 à 6 mois, pour des raisons d'ordre technique ou parfois simplement en raison d'une rupture d'approvisionnement en matériau de placage. Le feutre ainsi disposé sur les façades demeure donc à l'air libre pendant une période très longue et voit sa surface extérieure soumise à diverses agressions telles que le rayonnement solaire, ultra-violets en particulier, la pluie, le vent, la poussière, les chocs thermiques de toutes natures. On observe alors rapidement une détérioration progressive de la structure superficielle du feutre : décoloration ou tout au moins changement de couleur, déchirement de la surface exposée à l'air, voire arrachage de lambeaux de fibres.

En dehors de l'aspect inesthétique donné à l'ensemble de la construction, souvent inacceptable en lui-même, cette détérioration de la structure superficielle conduit également à une dégradation importante du liant organique qui est affaiblit par le rayonnement ultra-violet et littéralement lessivé en surface par le ruissellement des eaux de pluie. Lorsque finalement les travaux sont repris, après les quelques mois d'interruption, le feutre paraît simplement dégradé en surface mais si on retire la protection externe au bout de quelques années on peut constater que les fibres ou au moins une partie d'entre elles sont tombées faute de liant et se sont accumulées dans la partie basse du bâtiment.

Il a été proposé de peindre les panneaux isolants avec une peinture réfractaire au latex projetée sur la surface extérieure des panneaux. Toutefois, cette technique n'est pas satisfaisante avec les produits les plus légers qui agissent comme des éponges et qui nécessitent de ce fait des quantités très importantes de peinture si on veut une résistance à la vapeur d'eau satisfaisante. Le brevet finlandais 70 286 propose d'obvier ce dernier problème au moyen d'un voile en fibres de verre intercalé entre la couche isolante et la couche de peinture, ce voile réduisant la possibilité d'imprégnation de la couche isolante par la peinture latex.

En pratique, les auteurs de la présente invention ont constaté que les peintures latex présentent une résistance aux ultra-violets inférieure à celle souhaitable si le produit isolant doit subir une exposition prolongée. D'autre part, le voile, surtout s'il est renforcé et épaissi par une couche de peinture, conduit à un effet de "matelas" lorsque le panneau est fixé par embrochage sur des fixations mécaniques comportant un arrêt sous forme de rondelles ou de rosaces. Ce phénomène de matelassage nuit légèrement à la qualité de l'isolation et présente de plus l'inconvient d'être jugé inesthétique par la plupart des maîtres d'oeuvre.

Du document WO-A-82/01024, il est connu d'isoler une façade en rénovation en la couvrant avec des panneaux isolants de préférence en laine minérale puis en étendant aux quatre coins de la paroi à isoler un voile de verre qui reçoit ensuite un enduit étanche à l'eau mais non à la diffusion, de préférence du type acrylate de vinyle dispersé dans de l'eau avec une charge de marbre concassé, sable ou analogue. La mise en place d'un tel voile et de l'enduit est une opération longue qui ne peut être réalisée pour une simple protection provisoire. De plus, une pose en deux étapes supplémentaires est beaucoup plus onéreuse.

L'invention a pour but un produit isolant à base de laine minérale consolidée par une résine organique destiné à l'isolation par l'extérieur de bâtiments et apte à supporter une exposition prolongée aux intempéries.

Conformément à la revendication 1, ce but est atteint par un produit isolant thermique et phonique pour l'isolation par l'extérieur des façades comportant un feutre de fibres minérales liées par un liant organique revêtu directement, sur sa face destinée à être tournée vers l'extérieur, d'un enduit poreux vinylique, stable vis-à-vis des rayons ultra-violets, étanche aux eaux de ruissellement et perméables aux gaz et aux vapeurs.

De préférence, l'enduit est constitué par une peinture du type acétate de polyvinyle, déposée sur la surface à raison de 50 à 70 g/m² après séchage. La peinture, de préférence ignifugée, peut être colorée, par exemple selon la teinte du liant organique. La très faible épaisseur de la couche de peinture suffit de manière surprenante à conférer la protection aux intempéries requise et ne conduit pas à une modification de l'aspect du panneau après sa pose.

Le produit selon l'invention peut être avantageusement obtenu en pulvérisant à la surface d'une bande d'un feutre en fibres minérales liées par une résine polymérisée une dispersion aqueuse ou organique génératrice de l'enduit poreux vinylique et polymérisant par séchage à une température de l'ordre de 150° C environ, par courant d'air chaud ou au moyen de rayonnement infra-rouge.

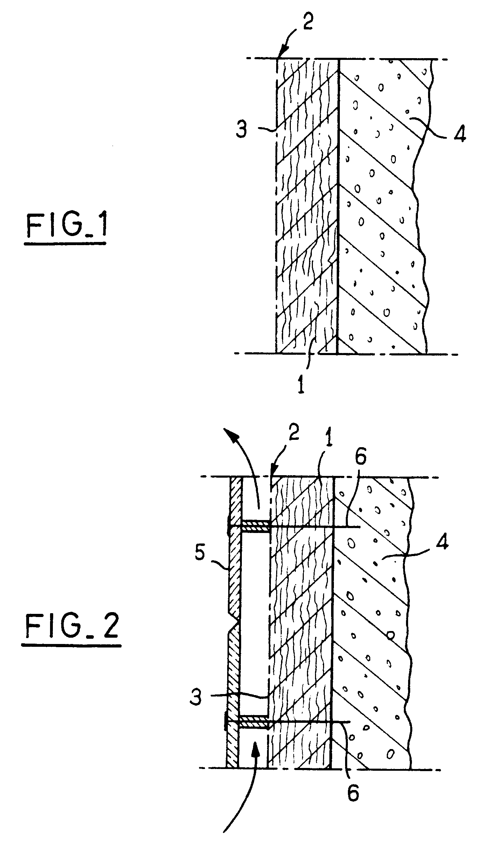

D'autres détails et caractéristiques avantageuses de l'invention sont donnés ci-après en référence aux dessins annexés qui représentent :
. **figure 1** : une vue en coupe d'un produit selon l'invention,
. **figure 2** : un schéma de mise en oeuvre du matériau.

La présente invention a plus particulièrement pour objet un matériau isolant thermique et phonique en feutre de fibres minérales 1, destiné à l'isolation par l'extérieur des façades, comportant à sa surface exposée aux intempéries un enduit poreux à base de matière polymérisée stable vis-à-vis des rayons ultra-violets, étanche aux eaux de ruissellement et perméable aux gaz et aux vapeurs.

Ledit enduit 3 est en effet appliqué sur le feutre en quantité telle qu'il demeure poreux, respecant en cela la structure même du feutre de fibres minérales. Cette porosité est nécessaire car, pour qu'il joue pleinement son rôle, le matériau isolant doit pouvoir laisser l'air et les vapeurs au travers de sa masse, principalement lorsqu'il n'est pas protégé par un placage externe. En demeurant à l'état sec, il voit son pouvoir d'isolation thermique augmenté.

Pour qu'il joue efficacement son rôle de protection mécanique (résistance à la pression du vent ou de la pluie, résistance à l'arrachement des fibres), l'enduit 3 doit présenter une structure suffisamment solide, structure que l'on réalise bien à l'aide de matières polymérisées adéquates. A titre de matières polymérisées, on utilise selon l'invention des polymères ou copolymères vinyliques du type acétate de polyvinyle, chlorure de polyvinyle. Pour assurer en outre la pérénité du matériau, ledit enduit 3 doit être stable vis-à-vis des rayons ultra-violets qui, à terme et en grande quantité, provoquent le "cracking" des chaînes de polymères, phénomène dont par ailleurs on cherche à préserver la résine utilisée pour l'encollage des fibres qui se dépolymérise en surface au cours du temps, ce qui conduit irrémédiablement à l'arrachage de lambeaux de fibres.

La résistance de l'enduit 3 à l'action des rayons ultra-violets se fait au moyen d'additifs appropriés connus. La nature des matières polymérisées peut également avoir son importance dans ce phénomène.

En situation, les bandes ou panneaux de feutre 1 sont disposés verticalement. L'enduit 3 assure, dans une telle situation, l'étanchéité aux eaux de ruissellement, pluie ou écoulements de toutes natures. Lorsque la pluie est par contre chassée par le vent, l'étanchéité n'est plus assurée avec la même efficacité, mais la nature poreuse dudit enduit remplit alors son rôle en laissant passer les vapeurs d'eau présentes au sein de la masse, lorsque la pluie a cessé.

Par fibres minérales, on entend désigner, au sens de la présente invention, de la laine de verre ou de la laine de roche par exemple.

Au vue de sa destination (isolation de façades de bâtiments), le matériau selon l'invention est de préférence ignifugé : l'ignifugation se réalise à l'aide de substances appropriées, normalement distribuées au sein de l'enduit 3, par exemple de l'hydroxyde d'aluminium. Les quantités d'agents ignifugeants seront déterminées en fonction des normes à respecter.

L'aspect esthétique du problème n'étant pas à négliger, comme indiqué plus haut, l'enduit 3 peut être avantageusement coloré à l'aide de pigments stables aux rayons ultra-violets, organiques et/ou minéraux. De tels pigments sont bien connus de l'homme de l'art et couramment commercialisés.

Pour ce qui est des quantités d'enduit 3 présentes à la surface extérieure 2 du feutre 1, on obtient de bons résultats avec des quantités comprises entre 50 et 70 g/m², étant entendu que de telles valeurs peuvent être transgressées en fonction des buts poursuivis. Une couche trop mince nuirait cependant à la résistance mécanique attendue, alors qu'une charge trop importante, nettement supérieure à 70 g/m², compromettrait la qualité de l'ensemble, la porosité souhaitée n'étant pas obtenue.

L'invention a également pour objet un procédé de fabrication du matériau isolant décrit ci-dessus. Ce procédé se caractérise par le fait que l'on enduit, en quantité prédéterminée, la surface extérieure 2 d'un feutre de fibres minérales 1 à l'aide d'une dispersion aqueuse ou organique génératrice de matière polymérisée stable vis-à-vis des rayons ultra-violets, et que l'on sèche ensuite la surface ainsi enduite.

Cette enduction s'effectue en usine, en fin de la chaine de fabrication du feutre de fibres minérales, à l'aide de tout dispositif adéquat, rouleau encreur ou pistolet par exemple. La dispersion utilisée comprend les mélanges générateurs de polymères ou copolymères souhaités, l'agent stabilisant anti-ultra-violet et, le cas échéant, le ou les pigments choisis. La dispersion peut être aqueuse, organique ou encore organique aqueuse ; elle est appliquée à la surface 2 du feutre, en quantités telles qu'il en résulte, après séchage, un enduit présentant le poids par unité de surface adéquat, de préférence 50 à 70 g/m². La polymérisation proprement dite s'effectue le plus généralement par séchage à une température de l'ordre de 150° C environ, par courant d'air chaud ou au moyen de rayonnement infra-rouge.

Une fois ainsi apprêté et séché, le feutre 1 est coupé en bandes ou panneaux, aux dimensions choisies. Ces bandes ou panneaux de feutre sont ensuite prêts à l'emploi.

Ils sont utilisés de préférence comme suit : sur une façade bétonnée 4 par exemple, on dispose le feutre 1, la surface comportant l'enduit 3 étant bien entendu à l'air libre. Les bandes ou panneaux de feutre sont fixés à la façade 4 par collage par exemple, ou à l'aide de tiges, pastilles ou tétons par exemple. Pour la réalisation des façades ventilées proprement dites, on procède à l'enfoncement de tiges de soutien 6 jusque dans la masse de béton 4 ; des éléments d'écartements 7 sont disposés sur les tiges 6 supportant les plaques 5, afin d'assurer la régularité de l'espace ainsi aménagé.

L'exemple ci-après est donné à titre purement indicatif :
* feutre de laine de verre, densité de l'ordre de 30 à 36 kg/m³, résine phénol-formaldehyde (8 %),
* dispersion organique à environ 60 % de polyvinyl acétate, polyvinyl-chlorure et polyéthylène stable aux ultra-violets et ignifugée par addition de Al(OH)₃ - Densité 1,40 à 1,42 -Viscosité 720 mPas,.
* enduction au pistolet suivie de séchage à 150° C durant 15 minutes environ. Lorsque cette dispersion est en outre colorée à l'aide de pigments, on ne dénote aucune modification de couleur après séchage,
* produit résultant : feutre en plaque ou en bande de 30 mm environ d'épaisseur - Revêtement : 60 g/m².

Des essais en situation réelle (pluie, vent, soleil) ont montré qu'un tel matériau isolant n'avait subi aucune détérioration notable en surface après 6 mois d'exposition. Dans la règle, une telle période suffit largement à la pose du placage extérieur constituant la façade ventilée.

## Revendications

1. Produit isolant thermique et phonique pour l'isolation par l'extérieur des façades comportant un feutre de fibres minérales liées par un liant organique revêtu directement, sur sa face destinée à être tournée vers l'extérieur, d'un enduit poreux vinylique, stable vis-à-vis des rayons ultra-violets, étanche aux eaux de ruissellement et perméables aux gaz et aux vapeurs.

2. Produit selon la revendication 1, **caractérisé en ce** **que** l'enduit (3) est un polymère du type acétate de polyvinyle ou chlorure de polyvinyle.

3. Produit selon l'une des revendications 1 et 2, **caractérisé en ce que** l'enduit (3) est ignifugé.

4. Produit selon l'une des revendications 1 à 3, **carac****térisé en ce que** l'enduit (3) est coloré à l'aide de pigments organiques et/ou minéraux.

5. Produit selon l'une des revendications 1 à 4, **carac****térisé en ce que** l'enduit (3) est déposé sur la surface extérieure (2) du feutre (1) à raison de 50 à 70 g/m² après séchage.

6. Procédé de fabrication d'un produit isolant selon l'une des revendications précédentes, **caractérisé en ce qu'**on enduit, en quantité prédéterminée, la surface extérieure (2) d'un feutre de fibres minérales (1) à l'aide d'une dispersion aqueuse ou organique génératrice de manière polymérisée stable vis-à-vis des rayons ultra-violets, et que l'on sèche ensuite la surface ainsi enduite.

7. Procédé selon la revendication 6, **caractérisé en ce** **que** l'enduction s'effectue en quantité telle qu'après séchage de la dispersion, subsiste un enduit (3) réparti à raison de 50 à 70 g/m².

8. Procédé selon l'une des revendications 6 et 7, **caractérisé en ce que** la dispersion contient des substrances ignifugeantes et, le cas échéant, des pigments organiques et/ou minéraux.

9. Utilisation d'un matériau isolant thermique et phonique selon l'une des revendications 1 à 5 pour la construction de façades ventilées.

## Patentansprüche

1. Wärme- und schalldämmendes Produkt zur äußeren Dämmung von Fassaden, welches einen Filz aus mit einem organischen Bindemittel gebundenen Mineralfasern aufweist und auf derjenigen Oberfläche, welche dazu vorgesehen ist, nach außen gekehrt zu werden, mit einem porösen Vinylüberzug direkt kaschiert ist, welcher beständig gegen ultraviolette Strahlung, dicht gegen Rieselwasser, und durchlässig gegen Gase und Dämpfe ist.

2. Produkt nach Anspruch 1, **dadurch gekennzeichnet, daß** der Überzug (3) ein Polymer vom Typ Polyvinylacetat oder Polyvinylchlorid (PVC) ist.

3. Produkt nach einem der Ansprüche 1 und 2, **dadurch gekennzeichnet, daß** der Überzug (3) flammhemmend ausgerüstet ist.

4. Produkt nach einem der Ansprüche 1 bis 3, **dadurch** **gekennzeichnet,** **daß** der Überzug (3) mittels organischer und/oder mineralischer Pigmente gefärbt ist.

5. Produkt nach einem der Ansprüche 1 bis 4, **dadurch gekennzeichnet, daß** der Überzug (3) in einem nach dem Trocknen 50 bis 70 g/m² betragenden Flächengewicht auf der Außenfläche (2) des Filzes (1) aufgebracht wird.

6. Verfahren zur Herstellung eines Dämmprodukts nach einem der vorgehenden Ansprüche, **dadurch gekennzeichnet, daß** die Außenfläche (2) eines Mineralfaserfilzes (1) mittels einer wäßrigen oder organischen Dispersion für die Erzeugung eines polymerisierten Stoffes beschichtet wird, welcher gegen ultraviolette Strahlung beständig ist, und daß die auf diese Weise beschichtete Oberfläche dann getrocknet wird.

7. Verfahren nach Anspruch 6, **dadurch gekennzeichnet, daß** die Beschichtung in einer solchen Menge durchgeführt wird, daß nach dem Trocknen der Dispersion ein Überzug (3) verbleibt, welcher in einem Flächengewicht von 50 bis 70 g/m² verteilt ist.

8. Verfahren nach einem der Ansprüche 6 und 7, **dadurch gekennzeichnet, daß** die Dispersion flammhemmend Stoffe und gegebenenfalls organische und/oder mineralische Pigmente enthält.

9. Verwendung eines wärme- und schalldämmenden Materials nach einem der Ansprüche 1 bis 5 für die Errichtung von hinterlüfteten Fassaden.

## Claims

1. Heat and sound insulating product for the exterior insulation of facades comprising a felt consisting of mineral fibres connected by an organic binder and coated directly on its face which is to be turned towards the exterior with a porous vinyl coating which is stable with respect to ultra-violet rays, which is sealed with respect to running water, and which is permeable to gases and vapours.

2. Product according to Claim 1, characterized in that the coating (3) is a polyvinyl acetate or polyvinylchloride type polymer.

3. Product according to either of Claims 1 and 2, characterized in that the coating (3) is fireproofed.

4. Product according to any one of Claims 1 to 3, characterized in that the coating (3) is coloured with organic and / or mineral pigments.

5. Product according to any one of Claims 1 to 4, characterized in that the coating (3) is deposited on the outer surface (2) of the felt (1) at a rate of 50 to 70 g/m² after drying.

6. Method of producing an insulating product according to any one of the preceding claims, characterized in that the outer surface (2) of a mineral fibre felt (1) is coated with a predetermined quantity of an aqueous or organic dispersion which produces a polymerized substance which is stable with respect to ultra-violet rays; and in that the surface thus coated is then dried.

7. Method according to Claim 6, characterized in that coating is carried out in such an amount that, after the dispersion has dried, a coating (3) remains which is distributed at the rate of 50 to 70 g/m².

8. Method according to either of Claims 6 and 7, characterized in that the dispersion contains fireproofing substances and optionally organic and / or mineral pigments.

9. Use of a heat and sound insulating material according to any one of Claims 1 to 5 for the construction of ventilated facades.
